Europäisches Patentamt

(19) European Patent Office

Office européen des brevets

(11) **EP 0 692 938 B1**

(12) **EUROPEAN PATENT SPECIFICATION**

(45) Date of publication and mention
of the grant of the patent:
**28.07.1999 Bulletin 1999/30**

(21) Application number: **94912375.6**

(22) Date of filing: **31.03.1994**

(51) Int. Cl.[6]: **A23L 1/217**, A23L 1/164,
A23D 9/00

(86) International application number:
**PCT/US94/03551**

(87) International publication number:
**WO 94/23591 (27.10.1994 Gazette 1994/24)**

(54) **REDUCED CALORIE SNACK FOOD PRODUCT COMPRISING A REDUCED CALORIE FAT COMPOSITION OR FRIED IN SAID FAT COMPOSITION OR COATED WITH SAID FAT COMPOSITION**

KALORIENREDUZIERTE SNACKPRODUKTE ENTHALTEND EINE KALORIENREDUZIERENDE ZUSAMMENSETZNG ODER IN DIESER FETTZUSAMMENSETZUNG GEBRATEN, ODER MIT DIESER FETTZUSAMMENSETZUNG BESCHICHTET

COLLATION LEGERE A TENEUR REDUITE EN CALORIES, CONTENANT UNE COMPOSITION DE MATIERE GRASSE PAUVRE EN CALORIES, FRITE DANS LADITE COMPOSITION DE MATIERE GRASSE OU ENROBEE DE LADITE COMPOSITION DE MATIERE GRASSE

(84) Designated Contracting States:
**AT BE CH DE DK ES FR GB GR IE IT LI LU NL PT SE**

(30) Priority: **08.04.1993 US 45458**
**23.03.1994 US 210441**

(43) Date of publication of application:
**24.01.1996 Bulletin 1996/04**

(73) Proprietor:
**THE PROCTER & GAMBLE COMPANY**
**Cincinnati, Ohio 45202 (US)**

(72) Inventors:
• **MONTEZINOS, David, Lee**
**Fairfield, OH 45014 (US)**
• **YOUNG, Herbert, Thomas**
**Cincinnati, OH 45231 (US)**
• **BIEDERMANN, David, Thomas**
**Cincinnati, OH 45209 (US)**
• **RECE, Robert, Daniel**
**Edgewood, KY 41017 (US)**

(74) Representative:
**Engisch, Gautier et al**
**Procter & Gamble**
**European Technical Center N.V.**
**Temselaan 100**
**1853 Strombeek-Bever (BE)**

(56) References cited:
**WO-A-91/15964          WO-A-93/00823**
**WO-A-93/04599          US-A- 5 171 600**

• **B.HOLLAND: 'The Composition of Foods - 5th edition' 1992 , THE ROYAL SOCIETY OF CHEMISTRY AND MINISTRY OF AGRICULTURE, FISHERIES AND FOOD , LONDON (UK) Page 332 see item 1035, 1039**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This is a Continuation-in-Part of copending application Serial Number 08/045,458, filed April 8, 1993.

## TECHNICAL FIELD

The present invention relates to reduced calorie, low moisture cooked snack food products which do not impart a undesirable sensation of greasiness upon mastication and which have acceptable lubriciousness in the mouth.

## BACKGROUND OF THE INVENTION

Salted snacks such as fabricated potato snacks, corn chips and tortilla chips are particularly popular consumer snack products. In the case of fabricated potato snacks, whole potatoes are mashed and dried to provide potato flakes or granules, reconstituted to form a sheet of potato dough, and then pieces are fabricated from the potato dough sheet. These fabricated potato pieces are then immersed in a frying fat or oil medium that has been heated to temperatures of approximately 300°F to 400°F (148.9°C to 204.4°C).

The fabricated snack pieces are immersed in the hot frying medium for varying lengths of time, typically on the order of about 10 seconds to about 3 minutes, 30 seconds. While immersed, the pieces absorb a substantial quantity of the frying fat or oil, generally on the order of from about 35% to about 50% by weight of the finished snack or chip. Typically, soybean oil, cottonseed oil or peanut oil is used. Since these are triglycerides, significant caloric content (about 9 calories per gram of oil absorbed) is added to the fabricated snack pieces fried in such mediums.

Certain polyol fatty acid polyesters have been suggested as low calorie substitutes for these triglyceride fats and oils. For example, Mattson et al; U S Patent 3,600,186; Issued August 17, 1971, discloses low calorie food compositions in which at least a portion of the fat content of a fat-containing food is provided by a nonabsorbable, nondigestible sugar fatty acid ester or sugar alcohol fatty acid ester having at least 4 fatty acid ester groups with each fatty acid having from 8 to 22 carbon atoms. Unfortunately, regular ingestion of moderate to high levels of completely liquid forms of these polyol polyesters can produce undesirable passive oil loss, namely, leakage of the liquid polyol polyesters through the anal sphincter By contrast, completely solid versions of these polyol polyesters, while presenting no passive oil loss control problem, provide a sufficiently high solids content at mouth temperature such that foods containing these solid polyol polyesters taste waxy in the mouth when masticated.

As an alternative to completely liquid or completely solid nondigestible / nonabsorbable polyol fatty acid polyesters, certain intermediate melting polyol fatty acid polyesters have been developed that provide passive oil loss control, while at the same time reducing waxiness in the mouth. (See Bernhardt, European patent application 236,288, Published September 9, 1987; and Bernhardt, European patent application 233,856, Published August 26, 1987.) These intermediate melting polyol polyesters exhibit a unique rheology at body temperatures due to a matrix involving a minimal level of solids (e.g. about 12% or lower) that bind the remaining liquid portion. As a result, these intermediate melting polyol polyesters are sufficiently viscous and have a sufficiently high liquid/solid stability at body temperature to control passive oil loss.

However, it has been found that potato or other fabricated snacks that are fried in frying fats containing substantial levels of these intermediate melting polyol polyesters, particularly levels in excess of about 40%, have significantly increased waxiness impressions compared to snacks that have been fried in triglyceride fats or oils.

Another type of polyol polyester nondigestible fat composition which has been developed to overcome the passive oil loss/waxy mouthfeel problem comprises combinations of liquid polyol polyesters and certain types of solid particulate material selected so that, unlike the intermediate melting materials, such compositions have an essentially flat Solid Fat Content (SFC) profile slope over the temperature range between room temperature 21,1°C (70°F) and body temperature (98.6°F). The solid material in such compositions generally is present as very small particles (1 micron or less) and is present in relatively low concentrations. Frequently, such solid particulate material, which serves as a passive oil loss control agent, will be a solid polyol polyester which crystallizes into the desired especially small particles. Examples of solid oil loss control particles of this type are the diversely esterified polyol polyesters described in Letton; European Patent Application 311,154; Published April 12, 1989. Use of diversely esterified polyol polyester oil loss control agents of this type in preparing reduced calorie salted snack products such as potato chips is described in Young; U.S. Patent 5,085,884, Issued February 4, 1992.

WO 91/15964 discloses fat compositions useful in preparing reduced calorie potato chips and other low moisture fat-containing foods, having less waxiness and improved flavor display. The thixotropic areas of the fat composition reduces the waxiness impressions and the therein defined solid polyol polyesters control passive oil loss even at low levels.

WO 93/04599 teaches that the addition of hydrophobic silicas to a non digestible oil not only prevents passive oil loss but also provides a clear oil.

Notwithstanding the improved oil loss control and mouthfeel benefits provided by such prior art nondigestible fat compositions, fabricated snacks that have been fried in a reduced calorie fat composition containing substantial amounts of these materials and which contain the same fat levels as snacks fried in a triglyceride oil (e.g., 35% to 50%) can also impart an undesirable sensation of greasiness when chewed. (In terms of organoleptic properties, "greasiness" is described as a vaseline-like coating in the mouth.)

Accordingly, it would be desirable to have some means for providing low moisture cooked snack food products which contain a reduced calorie fat composition to realize caloric benefits, while still maintaining the desirable (e.g nongreasy and nonwaxy) taste of snack food products fried in a triglyceride fat or oil.

## SUMMARY OF THE INVENTION

The present invention relates to reduced calorie, low moisture cooked snack food products having desirably low greasiness with acceptable lubriciousness upon mastication. These snack food products comprise an edible substrate and a reduced calorie fat composition. The snack products are characterized by certain fat contents.

The reduced calorie fat composition which is used as a component of the snack products herein has a Waxy/Greasy Thixotropic Area Value ranging from 25 kilopascals/second (kPa/s) to 150 kPa/s and contains from 70% to 100% of a nondigestible fat component and from 0% to 30% of a conventional triglyceride fat or oil component. The nondigestible fat component of the reduced calorie fat composition comprises a blend of a liquid nondigestible oil and particles of nondigestible solid polyol polyester. The solid particles have a thickness of 1 micron or less and are dispersed in the liquid nondigestible oil in an amount sufficient to control passive oil loss upon ingestion of the liquid nondigestible oil. The nondigestible fat component furthermore has a Solid Fat Content profile slope between 21,1°C (70°F) and 37°C (98.6°F) of from 0 to -1,26% solids /°C (-0.75 %solids/°F).

The reduced calorie, low moisture cooked snack food products of the present invention are also characterized by fat contents ranging from 23% to 32%.

## DETAILED DESCRIPTION OF THE INVENTION

The present invention relates to low moisture cooked snack food products containing the fat compositions hereinbefore described. As used herein, the term " low moisture food" refers to a food having an end product moisture content of about 10% or less, preferably about 4% or less, more preferably about 3% or less, and most preferably about 2% or less. In addition to fabricated potato snacks, low moisture cooked snack food products include, for example, fried, baked and/or extruded salted snacks such a corn chips, tortilla chips, potato sticks, popcorn, corn curls and corn puffs, pellet snacks, half products, crackers and other extruded snacks based on corn or other grain cereals such as wheat, rice and the like.

The ingredients of the low moisture cooked snack food products of the present invention, the relationship of the ingredients, and the preparation of the snack food products herein, are described in detail as follows

### I. Ingredient Materials

The materials used to prepare the reduced calorie, low moisture cooked snack food products of the present invention include a edible substrate and a reduced calorie fat composition which is incorporated into and/or onto the edible substrate.

### A. Edible Substrate

One essential ingredient of the low moisture cooked snack food products of the present invention is a edible substrate. The edible substrate can comprise, for example, fabricated potato pieces. As used herein, the term "fabricated potato pieces" refers to potato pieces obtained from a dough sheet formed from mashed potatoes or reconstituted mashed potatoes (i.e., dried mashed potatoes in the form of flakes and/or granules to which water has been added). The edible substrate can also comprise fabricated pieces obtained from other non-potato based dough formed from corn, or other grains such as wheat, rice and the like. Processed whole grain non-dough based substrates such as popcorn and heat treated rice can also be employed.

### B. Reduced Calorie Fat Compositions

Another essential ingredient of the low moisture cooked snack food products of the present invention is a reduced calorie fat composition. Such reduced calorie fat compositions contain a nondigestible fat component and optionally a conventional triglyceride fat or oil component. The reduced calorie fat composition must have certain specific rheological characteristics as hereinafter more fully described.

## 1. Nondigestible Fat Component

The reduced calorie fat compositions used in the snack food products herein must contain a nondigestible fat component which comprises a blend of a liquid nondigestible oil and particles of solid nondigestible polyol polyester dispersed in the liquid nondigestible oil. Such a blend should have a relatively flat Solid Fat Content (SFC) profile slope across the range of temperatures between room temperature and body temperature. The liquid nondigestible oil and the particles of solid polyol polyester are described in detail as follows:

### a) Nondigestible Liquid Oil

A key component of the nondigestible fat component is a liquid nondigestible oil. For purposes of this invention a liquid oil is one which has a complete melting point below about 37°C. Suitable liquid nondigestible edible oils for use herein include liquid polyol fatty acid polyesters (see Jandacek; U.S. Patent 4,005,195; Issued January 25, 1977); liquid esters of tricarballylic acids (see Hamm; U.S. Patent 4,508,746, Issued April 2, 1985); liquid diesters of dicarboxylic acids such as derivatives of malonic and succinic acid (see Fulcher; U.S. Patent 4,582,927; Issued April 15, 1986); liquid triglycerides of alpha-branched chain carboxylic acids (see Whyte; U.S. Patent 3,579,548; Issued May 18, 1971); liquid ethers and ether esters containing the neopentyl moiety (see Minich; U.S. Patent 2,962,419; Issued November 29, 1960); liquid fatty polyethers of polyglycerol (See Hunter et al; U.S. Patent 3,932,532; Issued January 13, 1976); liquid alkyl glycoside fatty acid polyesters (see Meyer et al; U.S. Patent 4,840,815; Issued June 20, 1989); liquid polyesters of two ether linked hydroxypolycarboxylic acids (e.g., citric or isocitric acid) (see Huhn et al; U.S. Patent 4,888,195; Issued December 19, 1988); liquid esters of epoxide-extended polyols (see White et al; U.S. Patent 4,861,613; Issued August 29, 1989); all of which are incorporated herein by reference, as well as liquid polydimethyl siloxanes (e.g., Fluid Silicones available from Dow Corning).

Preferred liquid nondigestible oils are the liquid polyol fatty acid polyesters that comprise liquid sugar fatty acid polyesters, liquid sugar alcohol fatty acid polyesters, and mixtures thereof. These frequently will be sucrose fatty acid esters.

The liquid polyol fatty acid polyesters suitable for use in the nondigestible fat component can be prepared by a variety of methods known to those skilled in the art. These methods include: transesterification of the polyol (i.e. sugar or sugar alcohol) with methyl, ethyl or glycerol fatty acid esters using a variety of catalysts; acylation of the polyol with a fatty acid chloride; acylation of the polyol with a fatty acid anhydride; and acylation of the polyol with a fatty acid, per se. See, for example, U.S. Patent Nos. 2,831,854, 3,600,186, 3,963,699, 4,517,360 and 4,518,772, all of which are incorporated be reference, which disclose suitable methods for preparing polyol fatty acid polyesters Specific, but nonlimiting, examples of the preparation of liquid polyol polyesters suitable for use in the practice of the present invention are disclosed in Young et al; World Patent Application US91-02394 (publication number WO91-15964). published October 31, 1991, which is incorporated by reference.

### b) Solid Polyol Polyester Particles

Another key component of the nondigestible fat component comprises nondigestible solid particles of certain polyol polyester material that are dispersed in the liquid nondigestible oil to control or prevent passive oil loss (See, for example, Zimmerman et al; U.S. Patent Application Serial No 514,795; Filed April 26, 1990, which is herein incorporated by reference ) Typically, these nondigestible solid particles are relatively small (e.g., 1 micron or less, preferably 0.1 micron or less, more preferably 0.05 micron or less) and have a complete melting point of above about 37°C but below the 500°C. preferably above about 50°C but below about 200°C, more preferably above about 60°C but below about 100°C. (See Elsen et al; U.S. Patent Application Serial No. 07/969,670; Filed October 30, 1992, which is herein incorporated by reference.)

The solid nondigestible particles dispersed in the nondigestible liquid oil component to provide passive oil loss control can be formed from a wide variety of both organic and inorganic materials. For example, the solid nondigestible particles can be formed from polyol polyesters in which the ester groups are formed from a combination of 1) $C_2$-$C_{12}$ short chain fatty acid radicals, $C_{12}$ or higher unsaturated fatty acid radicals, or a combination thereof, and 2) $C_{20}$ or higher saturated fatty acid radicals (See Jandacek et al, U.S. Patent 4,797,300, Issued January 10, 1989; Jandacek et al, U.S. Patent 5,107,398, Issued May 21, 1991; Letton et al, World Patent Application US91/02272 (publication number WO91-15960), Published October 31, 1991; Letton et al, World Patent Application US91/02388 (publication number WO91/15961), Published October 31, 1991; and Letton, European Patent Application 311,154, Published April, 12, 1989, all of which are herein incorporated by reference). The solid nondigestible particles can also be formed from other diversely esterified polyol polyesters (see Corrigan et al, U.S. Patent Application Serial No. 07/968,780. Filed October 30, 1992 and Corrigan, U.S. Patent Application Serial No 07/968,792, Filed October 30, 1992); from certain polymer-containing polyol polyesters (see Corrigan et al, U.S. Patent Application Serial No. 07/968,791, Filed October 30, 1992); from certain polyglycerol esters (see Howie, U.S Patent Application Serial No. 07/968,775, Filed October 30, 1992), or from a cocrystallized blend of polyol polyester hardstock and a crystal modifier (see Johnston et al, U.S. Patent Application Serial No. 07/969,607, Filed October 30, 1992); all of which are herein incorporated by reference.

These solid polyol polyester particles can be made according to prior known methods for preparing polyol polyesters. One such method of preparation is by reacting the acid chlorides or acid anhydrides of the respective fatty acids with sucrose, preferably using a sequential esterification process.

Another method for preparing these solid polyol polyesters is by the process of reacting the methyl esters of the respective fatty acids with sucrose In the presence of a fatty acid soap and a basic catalyst such as potassium carbonate See, for example, Rizzi et al, U.S. Patent 3,963,699, Issued June 15, 1976; Volpenhein, U.S. Patent 4,518,772, Issued May 21, 1985; and Volpenhein, U.S. Patent 4,517,360, Issued May 14, 1985, all of which are incorporated by reference. See also Young et al.; World Patent Application US91-02394 (publication number WO91-15964); Published October 31, 1991, which is herein incorporated by reference.

c) Formulation of the Nondigestible Fat Component

The nondigestible fat component of the reduced calorie fat compositions used in the snack food products herein can be formulated by blending together the liquid nondigestible oil and a sufficient amount of the solid polyol polyester particles to control or prevent passive oil loss. What constitutes a "sufficient amount to control or prevent passive oil loss" with regard to the solid polyol polyester particles depends upon the particular solid polyol polyester particles involved, the particular passive oil loss control benefits desired, and the particular level of greasiness impression which can be tolerated for foods containing the nondigestible fat.

The nondigestible fat component of the reduced calorie fat composition used in the snack food products of the present invention typically comprises from about 80% to about 99% liquid nondigestible oil and from about 1% to about 20% solid polyol polyester particles. Preferably such blends comprise from about 85% to about 99% liquid nondigestible oil and from about 1 to about 15% solid polyol polyester particles. More preferably, such blends comprise from about 91% to about 99% liquid nondigestible oil and from about 1% to about 9% solid polyol polyester particles.

The nondigestible fat component should furthermore exhibit relatively flat SFC profile slopes across the temperature range of from typical room temperature to body temperature, i e., from 21,1°C (70°F) to 37°C (98.6°F). Typically, the SFC profile slope between these temperatures is from 0 to -1,26 % solids /°C (-0.75 %solids/°F) preferably from 0 to -0,5 % solids /°C (-0.3 %solids/°F) and most preferable from 0 to -0,168 % solids /°C (-0 1 to (-0 1 %solids/°F). An appropriate method for determining the SFC profile slope of the nondigestible fat component of the compositions is set forth in the Analytical Methods section.

The nondigestible fat component can also be characterized in terms of its liquid/solid stability which provides an indication of the amount of passive oil loss control which will be provided by the nondigestible fat component. The liquid/solid stability of these liquid/solid blends is typically at least about 30%, preferably at least about 50%, more preferably at least about 60%, and most preferably at least about 70%. An appropriate method for determing the liquid/solid stability of the nondigestible fat component is also set forth in the Analytical Methods section hereinafter.

2. Conventional Triglyceride Oil or Fat Component

In addition to the nondigestible fat component, the reduced calorie fat compositions used in the snack food products of present invention can optionally include a conventional digestible triglyceride fat or oil.

As used herein, the term "triglyceride oil" refers to those triglyceride compositions which are fluid or liquid above about 25°C. Although not a requirement, the triglyceride oils useful in the present invention can include those which are fluid or liquid below 25°C. These triglyceride oils consist primarily of triglyceride materials, but can also include residual levels of other components such as mono- and diglycerides. To remain fluid or liquid at temperatures below 25°C, the triglyceride oil contains a minimal amount of glycerides having melting points higher than about 25°C so as to limit the solids increase when the triglyceride oil is cooled. It is desirable that the triglyceride oil be chemically stable and resistant to oxidation.

Suitable triglyceride oils can be derived from naturally occurring liquid vegetable oils such as cottonseed oil, soybean oil, safflower oil, corn oil, olive oil, coconut oil, palm kernel oil, peanut oil, rapeseed oil, canola oil (i.e., rapeseed oil low in erucic acid), sesame seed oil, sunflower seed oil, and mixtures thereof. Also suitable are liquid oil fractions obtained from palm oil, lard and tallow by, for example, graining or directed interesterification, followed by separation of the oils. Oils predominating in glycerides of unsaturated acids can need some hydrogenation to maintain flavor, but care should be taken not to greatly increase the amount of glycerides melting above 25°C. When oils are selected which have a larger amount of solids melting between 25° and 40°C than are desirable, it can be necessary to separate out the solids. For example, refined and slightly hydrogenated soybean oil is suitable, as well as refined cottonseed oil.

As used herein, the term "triglyceride fat" refers to those triglyceride compositions which are solid or plastic above about 25°C. These solid or plastic fats can be derived from plants or animals or can be edible synthetic fats or oils. For example, animal fats such as lard, tallow, oleo oil, oleo stock, oleo stearin and the like which are solid at room temperature can be utilized. Also, triglyceride oils, e.g. unsaturated vegetable oils, can be converted into plastic fats by partial hydrogenation of the unsaturated double bonds of fatty acid constituents of the oil followed by conventional chilling and crystallization techniques or by proper mixture with sufficient triglycerides which are solid at room temperature to form a rigid interlocking crystalline structure which interferes with the free-flowing properties of the liquid oil. See U.S. Patent 3,355,302 to Purves et al, issued November 28, 1967, and U.S. Patent 3,867,556 to Darragh et al, issued February 18, 1975 (herein incorporated by reference), for further examples of solid or plastic fats.

### 3. Formulation of the Reduced Calorie Fat Compositions

The fat compositions used in the snack food products of the present invention can be formulated by combining the nondigestible fat component and the conventional triglyceride fat or oil component in the desired proportions.

These fat compositions comprise from 70% to 100% nondigestible fat and from 0% to 30% triglyceride fat or oil. Preferably such compositions comprise from about 80% to 100% nondigestible fat and from 0% to about 20% triglyceride fat or oil. More preferably, such compositions comprise from about 90% to 100% nondigestible fat and from 0% to 10% triglyceride fat or oil, and most preferably such compositions comprise about 95% to 100% nondigestible fat and from 0% to about 5% triglyceride fat or oil.

### 4. Physical and Chemical Characteristics of the Reduced Calorie Fat Compositions Used Herein

It has been discovered that for the low moisture cooked snack food products herein to have the desired characteristics, the reduced calorie fat compositions incorporated into and/or onto the edible substrate must have certain rheological characteristics. In particular, the reduced calorie fat compositions used in the snack food products of the present invention must have a Waxy/Greasy Thixotropic Area Value at mouth temperature (92°F, 33.3°C) ranging from 25 to 150 kPa/s. Preferably, the reduced calorie fat compositions have a Waxy/Greasy Thixotropic Area Value ranging from about 40 kPa/s to about 140kPa/s, more preferably from about 55 to about 130 kPa/s, and most preferably from about 70 to about 120 kPa/s.

As used herein, the term "Waxy/Greasy Thixotropic Area Value" refers to a rheological measurement of the fat composition that relates to the energy per unit volume required to break down the physical structure of the fat under specific shear conditions. It has been found that the Waxy/Greasy Thixotropic Area Value of fat compositions is correlatable to the waxiness and greasiness impressions for snack food products containing these compositions. Fat compositions which have the hereinbefore described Waxy/Greasy Thixotropic Area Values will not impart an undesirable sensation of waxiness or greasiness to foods which contain these fat compositions at the levels hereinafter described. Waxy/Greasy Thixotropic Area Values for the fat compositions used in the snack food products herein can be determined using the procedure described in greater detail in the Analytical Methods section hereinafter.

It should also be noted that the reduced calorie fat compositions useful in the snack food products herein, such as those compositions which contain fatty acid ester groups, can be characterized using several known prior art measurements. The measurements can include, for example, determination of fatty acid content of such components, ester distributions of such components, and melting point determination by Differential Scanning Calorimetry (DSC) Procedures for making these measurements are described, for example, in Young; U.S. Patent 5,085,884; Issued February 4, 1992, incorporated herein by reference.

### II. Component Concentrations

The reduced calorie, low moisture cooked snack food products of the present invention are characterized by fat contents ranging from 23% to 32% by weight of the finished snack food product. It is believed that snack food products which contain the hereinbefore described reduced calorie fat compositions and which have a fat content of less than 23% will not have desirable lubriciousness, e.g., they will be dry. Furthermore, snack food products which contain the hereinbefore described fat compositions and which have a fat content of greater than 32% will have undesirable greasiness and/or waxiness impression when chewed. However, snack food products which contain the hereinbefore described fat compositions and which have a fat content raging from 23% to 32% will have both desirable lubriciousness and acceptable greasiness and waxiness impressions.

Preferably, the finished snack food products of the present invention will have fat contents ranging from about 24% to about 30%, more preferably, from about 24% to about 28%, and most preferably, from about 24% to about 27%.

Snack food products having these fat levels will typically have moisture contents of from 0% to about 4%, preferably from 0% to about 3%, and most preferably from 0% to about 2%.

III. Preparation of the Reduced Calorie, Low Moisture Cooked Snack Food Products

The low moisture cooked snack food products of the present invention are prepared by incorporating a reduced calorie fat composition into and/or onto an edible substrate. The particular fat contents which are desired are provided by treatment of the edible substrate prior to or during cooking, or treatment of the snack food product after cooking, or a combination thereof.

A. Incorporation of Reduced Calorie Fat Composition Into Edible Substrate

The low moisture cooked snack food products have a reduced calorie fat composition of the type described above incorporated into and/or onto an edible substrate of the type described above.

One means of incorporating the reduced calorie fat compositions into the edible substrate is to apply the reduced calorie fat composition to the exterior surface of the edible substrate. Snack food products prepared by applying the fat compositions to a portion or all of the surface of the edible substrate are referred to as fat-coated foods. The reduced calorie fat composition can also be incorporated into the interior of the edible substrate, or can be incorporated into the edible substrate, followed by application to the exterior surface thereof.

The low moisture snack food products herein are preferably coated with these compositions. The fat compositions can be applied by a variety of means including immersing, dipping, soaking, spraying, blowing, pouring, pan coating, (e.g., in a revolving pan), tumble coating, brushing, applying with a roller, rolling around in a container of fat composition, falling film methods, enrobing, and curtain coating. The fat composition can be heated during application to the edible substrate, such as in the case of frying. If desired, the fat compositions can be applied to the surface of the food, followed by heating, such as baking in the case of baked foods. The fat composition can also be applied to the surface of a food that already contains fat. Once applied to the surface, the fat composition is typically absorbed into the interior of the food, such as in the case of fabricated potato snack, corn chips and tortilla chips.

Crackers usually contain less than 20% fat when they are baked. Typically they are in the range of 8% to 15% fat levels. Additional fat or oil is added in a sprayer or enrober. For the reduced calorie fat compositions herein, the fat is heated to above 170°F (67°C) or its melt point before application to the cracker. Preferably the reduced calorie fat composition is applied at temperatures of from 170°F (67°C) to about 250°F (121°C). To enhance the absorption of the reduced calorie fat into the cracker, the cracker is held for a period of time, generally from 1 to 5 minutes, at 76,7°C (170°F) or above.

B. Providing the Desired Fat Content for the Finished Snack Food Product

Incorporation of the reduced calorie fat composition into the edible substrate according to the means described above can result in snack food products which are either too greasy or not lubricious. This is because the fat content of the finished snack food product is either too high or too low. For example, snack food products which are fried to completion in the hereinbefore described reduced calorie fat compositions will generally have fat contents ranging from about 35% to about 50%. Such snack food products will be undesirable greasy in the mouth. It has been found that snack food products having the desired fat contents can be provided by treatment of the edible substrate prior to or during cooking or by treatment of the snack food products after cooking.

1. Pre-Cooking Treatments

One way to provide snack food product having the desired fat contents is to treat fabricated potato snacks or the dough used to prepare fabricated snacks prior to cooking. For example, the absorption of fat into fabricated snack during frying can be reduced by increasing the thickness of the snack pieces. Various methods for reducing the fat content of potato chips fried in triglycercide oils have been tried. However, potato chips differ from he fabricated snacks herein in that in potato chips made from whole potato slices or pieces, the fat does not easily migrate into the center of the chip. In low moisture products made from doughs, the fat can migrate into the center of the snack piece.

Another way to reduce the amount of fat absorbed by fabricated snack during flying is to partially dry the fabricated potato snack such as by convection or microwave heating prior to frying. In addition, coating of raw fabricated potato snack with a thin hydrocolloid film (e.g., cellulose ethers, high amylose starch, protein, etc) will limit fat absorption during flying and result in finished chips having a lower fat content

The amount of fat absorbed by fabricated snacks during frying can be limited by careful control of the dough moisture level prior to flying and/or by incorporating maltodextrin into the dough used to prepare the fabricated snacks (see, for example, Lodge; U.S. Patent Application No. 07/438,275; filed September 21, 1990, herein incorporated by reference). For baked snack food products, the fat content of the finished snack product can be controlled via formulation of the dough and the amount of topical coating or addition.

A proofer box is used in tortilla snacks manufacturing to equilibrate the moisture within the dough before frying. This process can be used for the fabricated snacks herein.

## 2. Treatment of Edible Substrate During Cooking

When the reduced calorie fat composition is incorporated into the edible substrate by means of frying, the amount of fat absorbed by the edible substrate can be limited by flying at a low initial temperature with an increasing temperature profile through the fryer. (See Bensen et al; U.S. Patent 5,137,740; Issued August 11, 1992 and Swedish Patent Application 1,519,049; Published July 26, 1978). In addition, coating fabricated potato snack or fabricated snack products with a thin film of the reduced calorie fat composition and then baking in a convection or microwave oven can result in a desirable fat content for the finished snack product (see Dreher et al, U.S. Patent 4,756,916, Issued July 12, 1988; Yaun et al; U.S. Patent 4,283,425, Issued August 1981; and Mehta et al, Canadian Patent 1,151,945, Issued August 16, 1983).

## 3. Post-Cooking Treatments

Another way to provide snack food products having desirable fat contents is to remove a portion of the reduced calorie fat composition after it has been incorporated into and/or onto the edible substrate. The reduced calorie fat compositions may be removed from the snack food by any conventional post-fry treatment for the removal of triglyceride fats from snack food products. For example, the fat can be removed from the surface of the snack food product by steam stripping (see, for example, Neel et al; U.S. Patent 4,933,199; Issued June 12, 1990 and Young et al; U.S. Patent 5,171,600; Issued December 15, 1992) or by treatment of the snack food product with a solvent such as supercritical $CO_2$ or hexane to solubilize a portion of the surface and interior fat contained in the snack food product (see, Goulston, U.S. Patent 3,127,271, Issued march 31, 1964; and Kazlas et al, World Patent Application US91/05950 (publication number WO 92/03064), Published March 5, 1992). Fat can also be removed from the surface of the snack food product by immersing the snack food product in a liquid, e.g. ethanol, displaying a low solubility for the nondigestible fat composition for from about 0.5 to about 5 minutes to physically rinse the fat from the surface of the snack food products. Residual solvent on the snack food product is then removed in an oven under vacuum.

In addition, the fat can be removed from the surface of the snack food product by contacting the snack food product with a blast of hot air or nitrogen following frying (see, for example, Bernard; U.S. Patent 4,537,786; Issued August 27, 1985) or by centrifugation of fried snack food products while simultaneously contacting the snack food product with superheated steam, saturated steam, or a mixture of steam and hot dry air (see Hai et al; Canadian Patent 957,896; Issued November 19, 1974).

## ANALYTICAL TEST METHODS

A number of parameters used to characterize elements of the present invention are quantified by particular experimental analytical procedures. Each of these procedures is described in detail as follows:

## 1. Solid Fat Content (SFC) of Polyol Polyesters

The SFC is measured as described in U.S. 5,085,884 issued to Young et al., col. 21, lines 41 to 65 (herein incorporated by reference). Note that when the profile slope is calculated in °C the profile slope will be different by a factor of 1.8.

## 2. Polyol Polyester Liquid/Solid Stability Measurement

A sample of the polyesters is heated in a hot water bath at greater than 190°F (87.8°C) until it completely melts and is then thoroughly mixed. The sample is then poured to capacity into 4.4 ml. centrifuge tubes at 100°F (37.8° C). The sample is then allowed to recrystallize for 24 hours at 100°F (37.8°C) in a constant temperature room. The sample is then centrifuged at 60,000 rpm in a Beckman Model SW60 rotor for one hour at 100°F (37.8°C). The maximum force on the sample (i.e. at the bottom of the tube) is 485,000 g's. The percent liquid separated is then measured by comparing the relative heights of the liquid and solid phases. The height of the liquid phase is measured using a metric ruler and recorded in mm. The height of the sample is measure in the same way and recorded in mm. Two (2) mm (correction for curvature in the tube bottom) is added to the straight wall height to obtain "total height"

Liquid/solid stability (%) = 100 x (total sample height - liquid oil height) / total sample height .

### 3. Waxy/Greasy Thixotropic Area Value of Reduced Calorie Fat Compositions

The reduced calorie fat compositions used in the present invention exhibit certain rheological characteristics which correlate to waxy or greasy mouthfeel imparted by snack food products containing these fat compositions This method is used to determine the Waxy/Greasy Thixotropic Area Value of a reduced calorie fat composition where the solid component has crystallized via the cooling profile typical of conventional potato chips.

In this method, shear stress is measured as a function of shear rate between $0s^{-1}$ and $800s^{-1}$ using a cone and plate rheometer. The shear rate is first increased from $0s^{-1}$ to $800s^{-1}$ over 2 minutes and then decreased back to $0s^{-1}$ over 2 minutes at 92°F (33 3°C). The Waxy/Greasy Thixotropic Area is the area of the hysteresis between the ascending and descending flow-curves.

### A. Calibration of Recorder

A cooling profile template is placed on an X-Y recorder (Houston Instruments Model 200) so that time is the X-axis. In this case, the cooling profile used is an approximation of the cooling profile of a conventional potato chip and is typical of all deep fat fried salted snack products. The recorder switches are set to the parameters described on the template and then calibrated in the following manner:

1. Calibrator set to 50 mv.
2. ZERO potentiometer adjusted until pen indicates 10°C (50°F) on recorder.
3. Calibrator is set to 190 mv.
4. SPAN potentiometer is adjusted until pen indicates 87,8°C (190°F) on recorder.

The above steps 1-4 are repeated until the pen indicates the proper temperature without adjustment. The strip chart recorder is then attached to the analog input of a thermocouple reader (Omega #199A).

### B. Sample Preparation

A sample of the reduced calorie fat composition is heated until completely melted and then thoroughly mixed. Eight (8) grams of the sample are then weighed into a weighing pan (VWR Scientific #25433-008). The thermocouple (Omega #5TC-T-36-36 0.05 inch type T) is submerged in the sample in approximately the center of the pan, care being taken to keep the thermocouple tip from touching the bottom of the pan. The pan is then placed on a hot plate and heated to approximately 115,5°C (240°F). When this temperature is reached, the recorder is started and the pan is removed from the hot plate and placed on top of a lab bench. The temperature of the sample is controlled so as to precisely track the cooling curve shown on the template. This is achieved by providing gentle agitation to the pan to accelerate cooling and removal of the pan from the lab bench top to slow the cooling rate. This cooling process takes approximately 3 minutes to complete, after which time the thermocouple is removed. The reduced calorie fat sample is then tempered for 7 days at approximately 21,1°C (70oC) prior to measurement of the Waxy/Greasy Thixotropic Area.

### C. Rheometer Setup

The rheometer (Contraves Rheomat 115A with 2, 5 and 7 cm cones (2o angle) is interfaced with a computer and set up under the following conditions:

| Program Setup | | |
|---|---|---|
| Sensitivity | 1.0 | |
| First minimum shear rate (s-1) | 0.000 | |
| Time at minimum shear rate (s) temperature | 120.0 | Hold to allow sample equilibration |
| Ascending ramp time (s) | 120.0 | 2 minute scan 0 to 800 s-1 |
| Maximum shear rate (s-1) | 800.000 | |
| Hold time (s) | 1.0 | |
| Second minimum shear rate (s-1) | 0.000 | |
| Descending ramp time (s) | 120.0 | 2 minute scan 800 to 0 s-1 |
| Data Output Conditions | | |
| Printout of measured points | 1 to 15 | |
| Calculate Waxy/Greasy Thixotropic Area Value | | |
| Printout results | | |

D. Cone Selection

Using a CP-8 (2 cm) cone, measure the Waxy/Greasy Thixotropic Area of the sample according to this method. If the Waxy/Greasy Thixotropic Area is greater than 200 kPa/s, maximum accuracy has been attained. If the Waxy/Greasy Thixotropic Area is between 50 and 200 kPa/s, the method should be repeated using a CP-6 (5 cm) cone to obtain maximum accuracy. If the Waxy/Greasy Thixotropic Area Value is between 0 and 50 kPa/s, the method should be repeated using the CP-10 (7 cm) cone to obtain maximum accuracy.

E. Torque Calibration

The rheometer is calibrated for torque by lifting the measuring head away from the plate and then adjusting the knob on the front panel of the rheometer until the torque meter on the left of the adjustment knob reads "+000" with the "+" flashing.

F. Temperature Calibration

The temperature of the sample during analysis should be maintained at 33.3±0.1°C. After setting the recirculating bath to achieve approximately 33.3° C, the plate temperature is checked by applying a small amount of oil to the plate, positioning the cone onto the plate, inserting the thermocouple probe into the gap between the cone and the plate, and then allowing a few minutes for the temperature to equilibrate. The temperature is then read with the bath temperature being adjusted until the plate temperature is 33.3±0.1°C.

G. Sample Analysis

Approximately 4 grams of the reduced calorie fat sample is applied to the rheometer plate. The cone assembly is then lowered slowly onto the sample and seated firmly on the plate. At this point, the flow curve program is initiated. Upon completion of the run, a report is printed out listing the first 15 data points on the flow curve and the calculated Waxy/Greasy Thixotropic Area Value. The Waxy/Greasy Thixotropic Area is the hysteresis area between the ascending and descending flow curves and is reported as the Waxy/Greasy Thixotropic Area Value (Kpascals/sec.).

4. Fat Content of Fabricated potato snack or Fabricated potato snack

The fat content of fabricated potato snack or fabricated potato snack can be determined by soxhlet extraction as follows:

Equipment/Reagents:
Soxtec HT6 Extractor, water bath, hot oil bath, extraction beaker, extraction thimble, vacuum drying oven, nitrogen purging gas, methylene chloride, boiling stones, glass wool
Procedure:

1. Weigh the extraction thimble (to four places 0.0001) and record as tare.
2. Load approximately 8-12 grams of ground chip sample into thimble and record as gross weight (to 0.0001).
3. Place glass wool on top of chip sample in thimble to contain the chips in the thimble.
4. Place 2-3 boiling stones into extraction baker, weigh, and record weight as tare (to 0.0001).
5. Add 50 ml of methylene chloride to extraction beaker
6. Load extraction beaker and the thimble containing the chip sample into extractor.
7. Set oil bath at 110°C and water bath at 28.3°C and allow to equilibrate.
8. Lower thimble into extraction beaker and allow to boil for 60 minutes, with the condenser pet cock opened.
9. Raise thimble out of extraction beaker and rinse for 60 minutes.
10. Turn the condenser's pet cock to closed position, purge with nitrogen and allow methylene chloride to evaporate for 60 minutes.
11. Place extraction baker into vacuum oven at 120°C for 30 minutes.
12. Allow extraction beaker to cool to room temperature, weigh (to 0.0001) and record as final weight (weight baker, boiling stones and extracted fat).

Calculations:

1. Chip Sample Weight = gross wt (step 2) - tare wt (step 1)
2. Extracted Fat wt = final wt (step 12) - tare wt (step 4)
3. Fat Content (%) = [Extracted Fat wt/chip sample wt] x 100

5. Moisture Content of Fabricated Low Moisture Snack

The moisture content of a snack food product can be determined by a forced air oven volatiles method as follows:

Equipment:
Forced air oven, aluminum tins with lids, Cabinet-type desiccator
Procedure:

1. Weigh tin and lid to 0.0001 grams and record weight as tare weight
2. Place 2-3 gram ground chip sample into tin, weigh to 0.0001 grams and record as gross weight
3. Set oven temperature to 105°C
4. Place tin containing the chip sample in oven for 1 hour, uncovered
5. Remove tin containing the sample from the oven, cover the tin, and place in desiccator until cooled to room temperature
6 Weigh tin, lid and dried sample to 0.0001 grams and record as final dried weight

Calculations

1. Sample weight = gross wt. - tare wt.
2. Final weight = weight recorded in step 6
3. Moisture Content (%) = [(gross wt - final wt.)/sample wt] x 100

**EXAMPLES**

**Example 1**

Fabricated potato chip dough pieces are prepared on batch scale using the following ingredients:

| Flaked Potato Flour | 111.4g | 55.2% |
|---|---|---|
| Distilled Water | 70.0g | 35.0% |
| Maltrin M-180 maltodextrin | 14.0g | 7.0% |
| Sucrose | 2.0g | 1.0% |
| Emulsifier (blend of mono- and diglycerides) | 2.2g | 1.1% |

The potato flour, maltodextrin and sucrose are premeasured and added to a Cousinart. Measured amounts of distilled water and emulsifier are placed into a beaker and heated at 37,8°C (100°F) in a microwave oven. The water and emulsifier are stirred briefly and then added to the Cousinart. The complete mixture is blended for 2 minutes, stopped and the sides scraped. The mixture is then blended for another 2 minutes. The blended material is transferred to a Farinagraph equipped with a twin blade self-wiping mixing head, the head held at 37,8°C (100°F) the Farinagraph is run at 100 rpm until a reading of 350 Brabender units (BU) is reached. The dough is then removed from the mixing head, pushed into rough ball-shapes and transferred to the roll mill. Each ball is then passed through an 8" twin roll mill with a set gap of 3 to 5 millimeters to obtain a sheet thickness of about 23 to 27 millimeters. The sheets are then cut into pieces.

The dough pieces are fried in a 100% sucrose polyester frying oil for 20 to 25 seconds. The frying oil comprises a blend consisting of about 6% solid nondigestible particles and about 94% of liquid cottonseed sucrose polyester having the following attributes:

The liquid sucrose polyester has the following attributes:

| Fatty Acid Composition | |
|---|---|
| **Fatty Acid** | **%** |
| $C_{14}$ | 0.5 |
| $C_{16}$ | 20.3 |
| $C_{18:0}$ | 6.2 |
| $C_{18:1}$ | 37.3 |
| $C_{18:2}$ | 34.2 |
| $C_{18:3}$ | 0.3 |
| $C_{20}$ | 0.3 |
| $C_{22:1}$ | --- |
| $C_{22:0}$ | --- |
| $C_{24}$ | --- |
| Other | 0.9 |
| **Ester Distribution** | |
| % Octa | 74.6 |
| % Hepta | 25.0 |
| % Hexa | <0.1 |
| % Penta | <0.1 |
| % Lower | <0.1 |

The frying oil has a Waxy/Greasy Thixotropic Area Value of 115 kPa/s. The oil enter the fryer at a temperature of 176,7°C (350°F) and exits at approximately 165,5°C (330°F)

The solid nondigestible particles are formed from sucrose polyesters in which the ester groups are formed from fatty acids derived from soybean oil and $C_{22}$ saturated fatty acids. The solid sucrose polyester has the following attributes:

| Fatty Acid Composition | |
|---|---|
| $C_{14}$ | --- |
| $C_{16}$ | 1.7 |
| $C_{18:0}$ | 1.9 |
| $C_{18:1}$ | 4.0 |
| $C_{18:2}$ | 10.5 |
| $C_{18:3}$ | 0.7 |
| $C_{20}$ | 5.0 |
| $C_{22:1}$ | 0.2 |
| $C_{22:0}$ | 73.7 |
| $C_{24}$ | 1.9 |
| Other | 0.4 |
| Ester Distribution | |
| % Octa | 79.8 |
| % Hepta | 20.2 |
| % Hexa | <0.1 |
| % Penta | <0.1 |
| % Lower | <0.1 |

The Waxy/Greasy Thixotropic Area Value of the frying oil is 95 kPa/s. The finished fabricated potato chip has a fat content of 26.9%.

## Example 2

Tortilla chips are prepared from alkali-treated corn dough, i.e. masa. To prepare masa, dried corn is steeped in a water and lime solution (pH = 11.2) in a steam-jacketed vessel. The mixture is heated to boiling and then cooled to between 46,1°C (115°F) and 60°C (140°F) The corn is allowed to soak for 8 to 24 hours until the moisture content of the corn reaches about 50%. Following steeping, the corn is washed and then uniformly ground or milled into a dough (masa). The masa dough is sheeted at a thickness between 0.050" and 0.060" and cut into dough pieces. The dough pieces are partially baked in an oven for 12 to 18 seconds at a temperature between 232,2°C (750°F) and 482,2°C (900°F). The moisture content of the partially cooked dough pieces exiting the oven are between 35% and 40%.

The dough pieces are then batch fried in a 5-lb capacity batch fryer containing frying oil. The frying oil comprises 100% of a sucrose polyester blend comprising about 6% solid nondigestible particles and about 94% liquid soybean sucrose polyester. The Waxy/Greasy Thixotropic Area Value of the frying oil is 75 kPa/s. The frying oil is maintained at a temperature of 185°C (365°F) The dough pieces are fried for about 90 seconds. Upon removal from the fryer the finished tortilla chips have a fat content of 26.8% and a moisture content of about 1.0%.

## Example 3

Cracker dough is prepared in a horizontal batch mixer using the following formulation and mixing procedure:

| Ingredient | Weight (lbs.) |
|---|---|
| Sucrose polyester blend | 8.2 |
| High fructose corn syrup | 0.66 |
| Salt | 0.82 |
| Sodium sulfite | 0.32 |
| Trem Tabs (enzyme tablets) | 1 tablet |
| Water | 0.66 |
| Sugar | 4.50 |
| Butter | 0.28 |
| Corn Syrup | 1.10 |
| Malt | 1.30 |
| These ingredients are blended together and then mixed 90 seconds at 65 rpm. Trem Tab is an enzyme tablet readily available from bakery supply stores. | |
| Water | 14.3 |
| Whey | 0.54 |
| are added and mixed 180 seconds at 45 rpm. Then: | |
| Flour | 65.0 |
| Soda | 0.42 |
| Monocalcium phosphate | 0.66 |
| Ammonium bicarbonate | 0.68 |
| Water | 1.60 |
| are added and mixed 480 seconds at 45 rpm. | |

The sucrose polyester blend used in this formulation contains 8% solid non-digestible particles and 92% liquid soybean sucrose polyester. It has a Waxy/Greasy Thixotropic Area Value of about 110 kPa/s.

The dough is mixed to a final temperature of 75-80°F (about 24°C) and is then placed into a sheeter/roll mill that feeds a continuous cracker cutter and baking oven. The roll mill gauges the dough into a sheet having a thickness of 0.050 inches.

The crackers are cut from the dough sheet and the cracker dough forms are baked in a three zoned indirect fired oven for 3.5 minutes at an average temperature of about 458°F (236°C). After baking the product is cooled to room temperature. It has a moisture content of <3% and a sucrose polyester content of 9.8%.

The crackers are then reheated to 250°F (121°C) in a small lab oven for a sufficient time to reach temperature throughout the product. Sucrose polyester of the same composition as used in the cracker dough formulation above is heated to 175°F (79°C) and is sprayed onto the top surface of the cracker at a level such that there is a 27.4% weight increase. The total sucrose polyester content of the cracker at this point is 29.2%. The crackers are replaced in the oven for between 1-5 minutes at 175°F (79°C) then brought out and cooled to room temperature. Upon examination the sucrose polyester sprayed onto the surface of the product appears to have penetrated approximately half way into the cracker matrix. The crackers do not have greasy appearance, greasiness to the touch or greasiness upon mastication. The crackers are as lubricious as triglyceride crackers with comparable lipid levels.

## Claims

1. A reduced calorie, low moisture cooked snack food product having desirable low greasiness with acceptable lubriciousness upon mastication, which product comprises an edible substrate and a reduced calorie fat composition having a Waxy/Greasy Thixotropic Area Value of from 25 kPa/s to 150 kPa/s, the reduced calorie fat composition comprising:

A) from 70% to 100% of a nondigestible fat component; and

B) from 0% to 30% of a triglyceride fat or oil component; said nondigestible fat component comprising:

i) a liquid nondigestible oil; and

ii) nondigestible solid particles of polyol polyester having a thickness of 1 micron or less dispersed in said oil in an amount sufficient to control passive oil loss upon the ingestion of the reduced calorie fat composition;

said nondigestible fat component having a Solid Fat Content profile slope between 21,1°C (70°F) and 37°C (98.6°F) of from 0 to -1,26 % solids /°C (-0.75 % solids/°F),

wherein the finished snack food product has a fat content ranging from 23% to 32%.

2. A low moisture snack food product according to Claim 1 wherein the moisture content of the finished snack food product ranges from about 0% to about 4%.

3. A low moisture snack food product according to Claim 2 wherein the nondigestible fat component of the reduced calorie fat composition comprises:

a) from about 80% to about 99% of the liquid nondigestible oil; and b) from about 1% to about 20% of the nondigestible solid particles,

said nondigestible fat component having a Solid Fat Content profile slope between 21,1°C (70°F) and 37°C (98.6°F) of from 0 to about -1,26 % solids /°C (-0.1 %solids/°F).

4. A low moisture snack food product according to Claim 3 wherein the liquid nondigestible oil is a liquid sucrose polyester.

5. A low moisture snack food product according to Claim 4 wherein the reduced calorie fat composition has a Waxy/Greasy Thixotropic Area Value of from about 40 kPa/s to about 140 kPa/s and wherein the reduced calorie fat composition comprises:

a) from about 80% to 100% of a nondigestible fat component;

b) from 0% to about 20% of a triglyceride fat or oil component.

6. A low moisture snack food product according to Claim 5 which comprises a fabricated potato snack.

7. A low moisture snack food product according to Claim 6 wherein the finished fabricated potato snack has a fat content of from about 24% to about 30%.

8. A low moisture snack food product according to Claim 5 which comprises a tortilla snack.

9. A low moisture snack food product according to Claim 5 wherein the tortilla has a fat content of from about 24% to about 30%.

10. A low moisture snack food product according to Claim 5 which comprises a cracker.

11. A low moisture snack food product according to Claim 10 which has a fat content of 24% to 30%.

**Patentansprüche**

1. Reduzierten Kaloriengehalt, geringe Feuchtigkeit aufweisendes, gegartes Snack-Lebensmittelprodukt, das erwünscht geringe Fettigkeit mit annehmbarer Lubrizität beim Kauen aufweist, welches Produkt ein eßbares Substrat und eine Fettzusammensetzung mit reduziertem Kaloriengehalt, die einen Wachsigkeit / Fettigkeit-Thixotropiebereich-Wert (Waxy/ Greasy Thixotropic Area Value) von 25 kPa/s bis 150 kPa/s aufweist, umfaßt, wobei die Fettzusammensetzung mit reduziertem Kaloriengehalt umfaßt:

A) 70 bis 100% einer nicht verdaulichen Fettkomponente; und

B) 0 bis 30% einer Triglycerid-Fett- oder -Öl-Komponente; wobei die unverdauliche Fettkomponente umfaßt:

i) ein flüssiges nicht verdauliches Öl; und

ii) nicht verdauliche feste Teilchen aus Polyolpolyester mit einer Dicke von 1 μm oder weniger, welche in dem Öl in einer ausreichenden Menge dispergiert sind, um den passiven Ölverlust nach Verdauung der Fettzusammensetzung mit reduziertem Kaloriengehalt zu regulieren;

wobei die nicht verdauliche Fettkomponente einen Festfettgehalt-Profilanstieg zwischen 21,1°C (70°F) und 37°C (98.6°F) von 0 bis -1,26% Feststoffe/°C (-0,75% Feststoffe/°F) aufweist;
wobei das fertiggestellte Snack-Lebensmittelprodukt einen Fettgehalt im Bereich von 23 bis 32% aufweist.

2. Geringe Feuchtigkeit aufweisendes Snack-Lebensmittelprodukt nach Anspruch 1, wobei der Feuchtigkeitsgehalt des fertiggestellten Snack-Lebensmittelprodukts im Bereich von etwa 0 bis etwa 4% liegt.

3. Geringe Feuchtigkeit aufweisendes Snack-Lebensmittelprodukt nach Anspruch 2, wobei die nicht verdauliche Fettkomponente der Fettzusammensetzung mit reduziertem Kaloriengehalt umfaßt:

a) etwa 80 bis etwa 99% des flüssigen nicht verdaulichen Öls; und

b) etwa 1 bis etwa 20% der nicht verdaulichen festen Teilchen,
wobei die nicht verdauliche Fettkomponente einen Festfettgehalt-Profilanstieg zwischen 21,1°C (70°F) und 37°C (98.6°F) von 0 bis etwa -1,26% Feststoffe/°C (-0,1% Feststoffe/°F) aufweist.

4. Geringe Feuchtigkeit aufweisendes Snack-Lebensmittelprodukt nach Anspruch 3, wobei das flüssige nicht verdauliche Öl ein flüssiger Saccharosepolyester ist.

5. Geringe Feuchtigkeit aufweisendes Snack-Lebensmittelprodukt nach Anspruch 4, wobei die Fettzusammensetzung mit reduziertem Kaloriengehalt einen Wachsigkeit/Fettigkeit-Thixotropiebereich-Wert von etwa 40 kPa/s bis etwa 140 kPa/s aufweist, und wobei die Fettzusammensetzung mit reduziertem Kaloriengehalt umfaßt:

a) etwa 80 bis 100% einer nicht verdaulichen Fettkomponente;
b) 0 bis etwa 20% einer Triglycerid-Fett- oder -Öl-Komponente.

6. Geringe Feuchtigkeit aufweisendes Snack-Lebensmittelprodukt nach Anspruch 5, umfassend einen zubereiteten Kartoffelsnack.

7. Geringe Feuchtigkeit aufweisendes Snack-Lebensmittelprodukt nach Anspruch 6, wobei der fertiggestellte, zubereitete Kartoffelsnack einen Fettgehalt von etwa 24 bis etwa 30% aufweist.

8. Geringe Feuchtigkeit aufweisendes Snack-Lebensmittelprodukt nach Anspruch 5, umfassend einen Tortilla-Snack.

9. Geringe Feuchtigkeit aufweisendes Snack-Lebensmittelprodukt nach Anspruch 5, wobei die Tortilla einen Fettgehalt von etwa 24 bis etwa 30% aufweist.

10. Geringe Feuchtigkeit aufweisendes Snack-Lebensmittelprodukt nach Anspruch 5, umfassend einen Cracker.

11. Geringe Feuchtigkeit aufweisendes Snack-Lebensmittelprodukt nach Anspruch 10, welches einen Fettgehalt von 24 bis 30% aufweist.

**Revendications**

1. Produit alimentaire d'en-cas cuisiné à faible teneur en humidité, à calories réduites, ayant avantageusement un faible caractère gras avec une onctuosité acceptable lors de la mastication, ce produit comprenant un substrat comestible et une composition de graisse à calories réduites ayant une valeur d'aire thixotrope cire/graisse de 25 kPa/s à 150 kPa/s, la composition de graisse à calories réduites comprenant :

A) de 70 % à 100 % d'un constituant graisse non digestible ; et
B) de 0 % à 30 % d'un constituant graisse ou huile à triglycérides : ledit constituant graisse non digestible comprenant :

    i) une huile non digestible liquide ; et
    ii) des particules solides non digestibles de polyester polyol ayant une épaisseur de 1 µm ou moins, dispersées dans ladite huile en une quantité suffisante pour contrôler la perte d'huile passive lors de l'ingestion de la composition de graisse à calories réduites ;

    ledit constituant graisse non digestible ayant une pente du profil de teneur en graisse solide entre 21,1 °C (70 °F) et 37 °C (98,6 °F) de 0 à -1,26 % de matières solides/°C (-0,75 % de matières solides/°F) ;
    le produit alimentaire d'en-cas fini ayant une teneur en graisse allant de 23 % à 32 %.

2. Produit alimentaire d'en-cas à faible teneur en humidité selon la revendication 1, dans lequel la teneur en humidité du produit alimentaire d'en-cas fini va d'environ 0 % à environ 4 %.

3. Produit alimentaire d'en-cas à faible teneur en humidité selon la revendication 2, dans lequel le constituant graisse non digestible de la composition de graisse à calories réduites comprend :

    a) d'environ 80 % à environ 99 % de l'huile liquide non digestible ; et
    b) d'environ 1 % à environ 20 % des particules solides non digestibles,
    ledit constituant graisse non digestible ayant une pente du profil de teneur en graisse solide entre 21,1 °C (70 °F) et 37 °C (98,6 °F) et de 0 à environ -1,26 % de matières solides/°C (-0.1 % de matières solides/°F).

4. Produit alimentaire d'en-cas à faible teneur en humidité selon la revendication 3, dans lequel l'huile liquide non digestible est un polyester de saccharose liquide.

5. Produit alimentaire d'en-cas à faible teneur en humidité selon la revendication 4, dans lequel la composition de graisse à calories réduites a une valeur d'aire thixotrope cire/graisse d'environ 40 kPa/s à environ 140 kPa/s, et dans lequel la composition de graisse à calories réduites comprend :

    a) d'environ 80 % à 100 % d'un constituant graisse non digestible ;
    b) de 0 % à environ 20 % d'un constituant graisse ou huile à triglycérides.

6. Produit alimentaire d'en-cas à faible teneur en humidité selon la revendication 5, qui comprend un en-cas de pommes de terre fabriqué.

7. Produit alimentaire d'en-cas à faible teneur en humidité selon la revendication 6, dans lequel l'en-cas de pommes de terre fabriqué fini a une teneur en graisse d'environ 24 % à environ 30 %.

8. Produit alimentaire d'en-cas à faible teneur en humidité selon la revendication 5, qui comprend un en-cas de tortilla.

9. Produit alimentaire d'en-cas à faible teneur en humidité selon la revendication 5, dans lequel la tortilla a une teneur en graisse d'environ 24 % à environ 30 %.

10. Produit alimentaire d'en-cas à faible teneur en humidité selon la revendication 5, qui comprend un biscuit salé.

11. Produit alimentaire d'en-cas à faible teneur en humidité selon la revendication 10, qui a une teneur en graisse de 24 % à 30 %.